# EUROPÄISCHE PATENTSCHRIFT

(11) **EP 0 499 821 B1**
(45) Veröffentlichungstag und Bekanntmachung des Hinweises auf die Patenterteilung: **15.06.1994**
(21) Anmeldenummer: 92101114.4
(22) Anmeldetag: 24.01.1992
(51) Int. Cl.: F16K 1/226

(54) **Absperrorgan für fluide Medien**
Closure element for fluids
Elément obturateur pour fluides

(30) Priorität: 16.02.1991 DE 4104790
(43) Veröffentlichungstag der Anmeldung: 26.08.1992
(73) Patentinhaber: Kempchen & Co. GmbH, D-46009 Oberhausen (DE); EISENWERK HEINRICH SCHILLING GmbH & Co., D-33689 Bielefeld (DE)
(72) Erfinder: Tückmantel, Hans-Joachim, Dipl.-Ing., W-4330 Mülheim/Ruhr (DE); Liermann, Günter, Dipl.-Ing., W-4800 Bielefeld 11 (DE)
(74) Vertreter: Andrejewski, Walter

(56) Entgegenhaltungen:
- EP-A- 0 160 828
- FR-A- 2 456 271
- US-A- 3 905 577

## Beschreibung

Die Erfindung betrifft ein Absperrorgan für fluide Medien mit Gehäuse mit Strömungskanal, Absperrklappe, Absperrklappensitz im Gehäuse und Absperrklappenbetätigungseinrichtung, wobei die Absperrklappe eine kegelförmige Dichtfläche und der Absperrklappensitz eine komplementär kegelförmige Gegendichtfläche aufweisen sowie bei der Schließ- und Öffnungsbewegung die Dichtfläche praktisch reibungsfrei auf die Gegendichtfläche aufsetzbar bzw. von dieser abhebbar ist, wobei in dem die Dichtfläche tragenden Rand der Absperrklappe eine Nut für einen Dichtungsring angeordnet ist, wobei der Dichtungsring als Wellfederdichtungsring ausgebildet ist, der aus einer Mehrzahl von metallischen Wellringscheiben mit umlaufenden Wellenbergen und Wellentälern und Zwischenlagen aus einem Weichdichtungswerkstoff besteht.

Im allgemeinen ist bei solchen Absperrorganen die Absperrklappenbetätigungseinrichtung so gestaltet, daß auch ein Verspannen der Dichtfläche gegen die Gegendichtfläche erfolgt. Im geöffneten Zustand liegt bei solchen Absperrorganen die Dichtfläche im allgemeinen frei in dem fluiden Medium, welches unter anderem gegen die Dichtfläche anströmt.

Ein praktisch reibungsfreies Absetzen bzw. Abheben ist z. B. dadurch erreichbar, daß die Absperrklappenbetätigungseinrichtung mit einem Doppelexzenter ausgerüstet ist. Von praktisch reibungsfrei wird gesprochen, weil infolge von elastischen Verformungen des Absperrorgans insgesamt eine minimale Reibung der Dichtfläche gegen die Gegendichtfläche beim Aufsetzen bzw. beim Abheben bzw. beim Verpressen zugelassen werden kann.

Bei einem bekannten Absperrorgan der eingangs beschriebenen Gattung (FR-A-2 456 271) befindet sich in dem die Dichtfläche tragenden Rand eine Nut, in der ein Dichtungsring angeordnet ist. Der Dichtungsring besteht aus metallischen Wellringscheiben und Zwischenlagen aus einem armierten Dichtungswerkstoff. Der Dichtungsring ist in der Nut klemmend gehalten, aber nicht mit definierter Verformung vorgespannt. Die Dichtwirkung ist verbesserungsfähig. Das gilt insbesondere in bezug auf das Langzeitverhalten. Muß ein Dichtungsring ausgetauscht werden, so beeinträchtigt dieses die Verfügbarkeit der gesamten Anlage, der das Absperrorgan angehört. Im Ergebnis ist bei dem bekannten Absperrorgan des beschriebenen Aufbaus, von dem die Erfindung ausgeht, die Standzeit verbesserungsbedürftig.

Der Erfindung liegt die Aufgabe zugrunde, ein Absperrorgan des eingangs beschriebenen Aufbaus zu schaffen, welches sich durch eine ungewöhnlich große Standzeit auszeichnet.

Diese Aufgabe wird dadurch gelöst, daß zwischen den Wellringscheiben an diesen anliegende metallische Ringscheiben angeordnet sind, daß die Nut als Vorspannut ausgebildet ist und daß der Dichtungsring in der Vorspannut mit einer orthogonal zur Ebene der Absperrklappe wirkenden Vorspannkraft über die Dichtfläche mit einer Paßfläche vorstehend vorgespannt ist. Auf diese Weise wird erreicht, daß an der Paßfläche die Abdichtung stattfindet. Nach bevorzugter Ausführungsform der Erfindung ist die Vorspannut aus einer Auskammerung in der Absperrklappe und einem Vorspannring aufgebaut, der mit über den Umfang verteilten Vorspannschrauben gegen den Dichtungsring spannbar ist, und zwar auch betriebsmäßig nachstellbar durch bloße Betätigung der Vorspannschrauben. - Die Erfindung geht von der Erkenntnis aus, daß ein Dichtungsring des beschriebenen Aufbaus einerseits wegen des zwischengelagerten Weichdichtungswerkstoffes in radialer Richtung praktisch absolut dicht ist und bei der beschriebenen Anordnung mit Vorspannung in der Nut auch nicht unter Bildung einer Leckströmung umströmbar ist. Die Paßfläche wirkt ihrerseits als Dichtfläche. Ihr Kegelwinkel ist regelmäßig von dem der Gegendichtfläche ein wenig verschieden. Die Vorspannung bewirkt eine federnde Abdichtung des Dichtungsringes mit seiner Paßfläche Metall auf Metall an der Gegendichtfläche. Es versteht sich, daß bei dem erfindungsgemäßen Absperrorgan Dichtungsring, Dichtfläche und Gegendichtfläche so dimensioniert sein können, daß bei geschlossener Absperrklappe nicht nur der Dichtungsring mit seiner Paßfläche, sondern auch die Dichtfläche an der Gegendichtfläche anliegt, und zwar auch mit einer entsprechenden Vorspannung. Bei geschlossener Absperrklappe ist der Dichtungsring praktisch vollständig umgehungsdicht. Er ist im übrigen in sich dicht.

Bei dem erfindungsgemäßen Absperrorgan im geöffneten Zustand der Absperrklappe die Dichtfläche von dem strömenden Medium angeströmt wird, erfolgt auch eine entsprechende Beaufschlagung der Paßfläche des Dichtungsringes durch das strömende Medium. Dabei kann nicht verhindert werden, daß zwischen den metallischen Ringscheiben und den Wellringscheiben der Weichdichtungswerkstoff gleichsam erodiert wird. Diese Erosion wird jedoch dadurch unterbrochen, daß die Wellenberge der Wellringscheiben an den metallischen Ringscheiben anliegen. Überraschenderweise stört die so begrenzte Erosion des Weichdichtungswerkstoffes die Funktionsfähigkeit des Absperrorgans in bezug auf die Dichtwirkung der Absperrklappe in keiner Weise, weil die Dichtung in der beschriebenen Weise Metall auf Metall bewirkt wird, und bei Verschleiß nachstellbar ist.

Im einzelnen bestehen im Rahmen der Erfindung mehrere Möglichkeiten der weiteren Ausbildung und Gestaltung des erfindungsgemäßen Absperrorgans. So besteht vorzugsweise der Wellfederring aus zumindest zwei metallischen Ringscheiben und zumindest zwei Wellringscheiben, zwischen denen der Weichdichtungswerkstoff angeordnet ist, wobei eine Schicht aus dem Weichdichtungswerkstoff außerdem zu einer Anlagefläche der Vorspannut hin vorgesehen ist. Diese Anlagefläche ist vorzugsweise die druckraumseitige Anlagefläche im Strömungskanal des Absperrorgans. Bewährt hat sich eine Ausführungsform, bei der der Wellfederring zumindest fünf metallische Ringscheiben und zumindest fünf Wellringscheiben aufweist. Von praktischer Bedeutung erwies sich eine Ausführungsform mit sechs metallischen Ringscheiben und sechs Wellringscheiben. Es versteht sich, daß der Wellfederring eine Paßfläche aufweist, die nach Maßgabe der komplementären kegelförmigen Gegendichtfläche geformt ist. Die Formgebung der Paßfläche kann bei dem Dichtring des erfindungsgemäßen Absperrorgans ohne weiteres spanend und schleifend durchgeführt werden.

Im Rahmen der Erfindung kann mit den verschiedensten Werkstoffkombinationen für den Dichtungsring gearbeitet werden. Es empfiehlt sich, als Weichdichtungswerkstoff Graphit einzusetzen, z. B. in Form von Folien oder Tafeln als Blähgraphit. Die Ringscheiben und die Wellringscheiben bestehen zweckmäßigerweise aus Edelstahl, sie könnten aber z. B. auch aus Bronze aufgebaut sein. Die Dicke der Ringscheiben und der Wellringscheiben richtet sich nach den Dichtkräften, die aufgebracht werden. Die meisten in der Praxis vorkommenden Fälle lassen sich dadurch beherrschen, daß die metallischen Ringscheiben und die Wellringscheiben eine Dicke von etwa 0,5 mm besitzen. Aus dichtungstechnischen Gründen wird zweckmäßiger mit Wellringscheiben gearbeitet, die in radialer Richtung zumindest fünf Wellenberge bzw. Wellentäler aufweisen.

Im folgenden wird die Erfindung anhand einer lediglich ein Ausführungsbeispiel darstellenden Zeichnung ausführlicher erläutert. Es zeigen in schematischer Darstellung
- Fig. 1: einen Axialschnitt durch ein erfindungsgemäßes Absperrorgan in Richtung der Achse des Strömungskanals,
- Fig. 2: in gegenüber der Fig. 1 wesentlich vergrößertem Maßstab den Dichtungsring aus dem Gegenstand der Fig. 1.

Das in den Figuren dargestellte Abserrorgan ist für fluide Medien bestimmt. Es kann sich dabei um gasförmige Medien und um Flüssigkeiten handeln. Es versteht sich, daß solche Absperrorgane insbesondere in der chemischen Verfahrenstechnik und in Bereichen der Energieversorgung eingesetzt werden und werkstoffmäßig so eingerichtet sind, daß störende Korrosionen nicht auftreten.

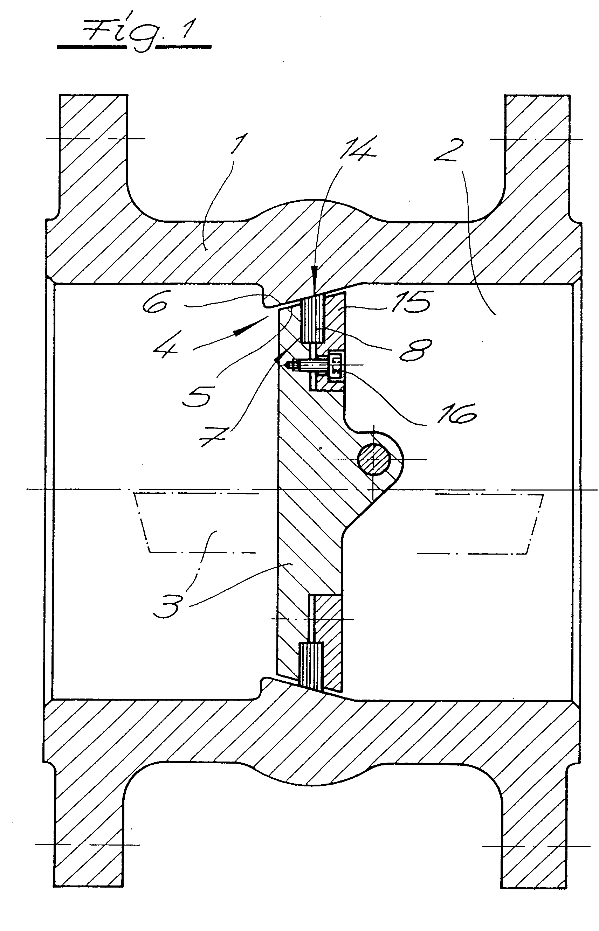

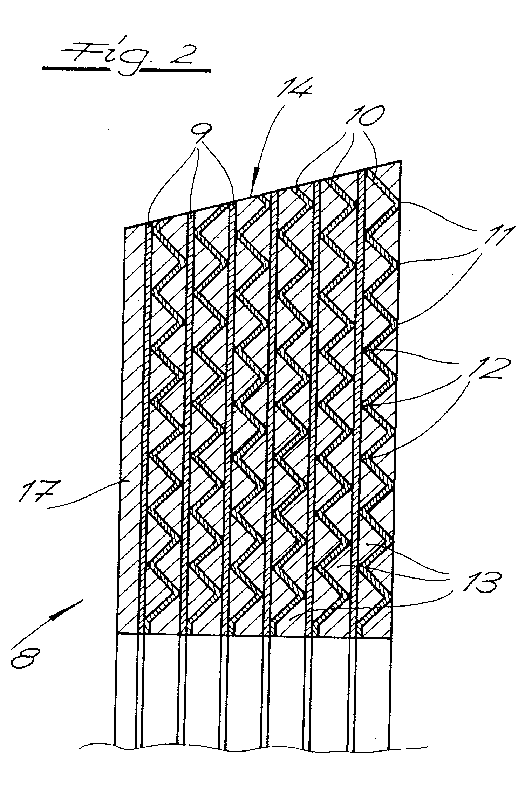

Zum grundsätzlichen Aufbau des Absperrorgangs gehören ein Gehäuse 1 mit Strömungskanal 2, eine Absperrklappe 3, ein Absperrklappensitz 4 im Gehäuse 1 und eine Absperrklappenbetätigungseinrichtung. Man entnimmt aus der Fig. 1, daß die Absperrklappe 3 eine kegelförmige Dichtfläche 5 und daß der Absperrklappensitz 4 eine komplementär kegelförmige Gegendichtfläche 6 aufweisen. Die Anordnung ist so getroffen, daß bei der Schließ- und Öffnungsbewegung die Dichtfläche 5 praktisch reibungsfrei auf die Gegendichtfläche 6 aufsetzbar bzw. von dieser abhebbar ist. In dem die Dichtfläche 5 tragenden Rand der Absperrklappe 3 befindet sich eine Vorspannut 7 für einen Dichtungsring 8. Aus einer vergleichenden Betrachtung der Fig. 1 und 2 entnimmt man, daß der Dichtungsring 8 als Wellfederdichtungsring ausgebildet ist, der aus einer Mehrzahl von metallischen Ringscheiben 9, zwischen den metallischen Ringscheiben 9 angeordneten metallischen Wellringscheiben 10 mit umlaufenden Wellenbergen 11 und Wellentälern 12 und Zwischenlagen 13 aus einem Weichdichtungswerkstoff besteht. Der Dichtungsring 8 ist in der Vorspannut 7 mit einer orthogonal zur Ebene der Absperrklappe 3 wirkenden Vorspannkraft, über die Dichtfläche 5 mit einer Paßfläche 14 vorstehend, vorgespannt. Das wurde im Ausführungsbeispiel übertrieben dargestellt. Es wird dadurch erreicht, daß die Vorspannut 7 aus einer Auskammerung in der Absperrklappe und einem Vorspannring 15 aufgebaut ist, der mit über den Umfang verteilten Vorspannschrauben 16 gegen den Dichtungsring 8 spannbar ist, und zwar nachstellbar. Auf diese Weise läßt sich der Überstand der Paßfläche 14 über der Dichtfläche 5 einstellen. Die Verhältnisse insgesamt können so eingerichtet werden, daß mit der eingangs schon beschriebenen Verspannung nicht nur die Paßfläche 14 des vorgespannten Dichtungsringes 8 gegen die Gegendichtfläche 6 gedrückt wird, sondern auch die Dichtfläche 5 selbst in ausreichendem Maße angedrückt wird.

Im Ausführungsbeispiel und nach bevorzugter Ausführungsform der Erfindung besteht der Wellfederring aus sechs metallischen Ringscheiben 9 und sechs Wellringscheiben 10, zwischen den der Weichdichtungswerkstoff 13 angeordnet ist. Die Anordnung ist so getroffen, daß eine Schicht 17 aus dem Weichdichtungswerkstoff außerdem zu einer Anlagefläche der Vorspannut 7 hin angeordnet ist, und zwar in der schon beschriebenen Weise druckraumseitig. Der Wellfederring 8 besitzt eine Paßfläche 14, die nach Maßgabe der komplementär kegelförmigen Gegendichtfläche 6 spanend und schleifend bearbeitet ist.

Bei dem Weichdichtungswerkstoff mag es sich um Graphit handeln. Die Ringscheiben und die Wellringscheiben mögen aus Edelstahl bestehen. Die Ringscheiben 9 und die Wellringscheiben 10 besitzen im Ausführungsbeispiel eine Dicke von etwa 0,5 mm. Sie wurden in den Zeichnungen übertrieben dick gezeichnet. Die Wellringscheiben 10 sind in radialer Richtung im Ausführungsbeispiel mit acht Wellenbergen 11 bzw. Wellentälern 12 versehen.

Im Rahmen der Erfindung liegt die kinematische Umkehr, bei der die Gegendichtfläche 6 die Vorspannut aufweist und in diese der Dichtungsring 5 eingesetzt ist.

## Patentansprüche

1. Absperrorgan für fluide Medien mit
Gehäuse (1) mit Strömungskanal (2),
Absperrklappe (3),
Absperrklappensitz (4) im Gehäuse (1) und
Absperrklappenbetätigungseinrichtung,
wobei die Absperrklappe (3) eine kegelförmige Dichtfläche (5) und der Absperrklappensitz (4) eine komplementär kegelförmige Gegendichtfläche (6) aufweisen sowie bei der Schließ- und Öffnungsbewegung die Dichtfläche (5) praktisch reibungsfrei auf die Gegendichtfläche (6) aufsetzbar bzw. von dieser abhebbar ist,
wobei in dem die Dichtfläche (5) tragenden Rand der Absperrklappe (3) eine Nut (7) für einen Dichtungsring (8) angeordnet ist,
wobei der Dichtungsring (8) als Wellfederdichtungsring ausgebildet ist, der aus einer Mehrzahl von metallischen Wellringscheiben (10)
mit umlaufenden Wellenbergen (11) und Wellentälern (12) und Zwischenlagen (13) aus einem Weichdichtungswerkstoff besteht, **dadurch gekennzeichnet**, daß zwischen den Wellringscheiben (10) an diesen anliegende metallische Ringscheiben (9) angeordnet sind, daß die Nut als Vorspannut (7) ausgebildet ist und daß der Dichtungsring (8) in der Vorspannut (7) mit einer orthogonal zur Ebene der Absperrklappe (3) wirkenden Vorspannkraft über die Dichtfläche (5) mit einer Paßfläche (14) vorstehend vorgespannt ist.

2. Absperrorgan nach Anspruch 1, wobei die Vorspannut (7) aus einer Auskammerung in der Absperrklappe (3) und einem Vorspannring (15) aufgebaut ist, der mit über den Umfang verteilten Vorspannschrauben (16) gegen den Dichtungsring (8) spannbar ist, und zwar nachstellbar.

3. Absperrorgan nach einem der Ansprüche 1 oder 2, wobei der Wellfederring aus zumindest zwei metallischen Ringscheiben (9) und zumindest zwei Wellringscheiben (10) aufgebaut ist, zwischen denen der Weichdichtungswerkstoff (13) angeordnet ist, und wobei eine Schicht (17) aus dem Weichdichtungswerkstoff außerdem zu einer Anlagefläche der Vorspannut (7) hin vorgesehen ist.

4. Absperrorgan nach einem der Ansprüche 1 bis 3, wobei der Wellfederring zumindest fünf metallische Ringscheiben (9) und zumindest fünf Wellringscheiben (10) aufweist.

5. Absperrorgan nach einem der Ansprüche 1 bis 4, wobei als Weichdichtungswerkstoff (13) Graphit eingesetzt ist.

6. Absperrorgan nach einem der Ansprüche 1 bis 5, wobei die Ringscheiben (9) und die Wellringscheiben (10) aus Edelstahl bestehen.

7. Absperrorgan nach einem der Ansprüche 1 bis 6, wobei die metallischen Ringscheiben (9) und die Wellringscheiben (10) eine Dicke von etwa 0,5 mm aufweisen.

8. Absperrorgan nach einem der Ansprüche 1 bis 7, wobei die Wellringscheiben (10) in radialer Richtung zumindest fünf Wellenberge (11) bzw. Wellentäler (12) aufweisen.

## Claims

1. A closure element for fluid media, with
a housing (1) with a flow channel (2),
a closure flap (3),
a closure flap seat (4) in the housing (1) and
a closure flap operating device,
wherein the closure flap (3) has a tapered sealing face (5) and the closure flap seat (4) has a complementary tapered opposite sealing face (6) and during the closing and opening movement the sealing face (5) can be placed on the opposite sealing face (6) and lifted off from the latter, respectively, practically without friction,
wherein a groove (7) for a sealing ring (8) is disposed in the edge of the closure flap (3) which bears the sealing face (5),
wherein the sealing ring (8) is constructed as a corrugated spring sealing ring which consists of a plurality of metal corrugated annular discs (10) with surrounding corrugation peaks (11) and corrugation troughs (12) and intermediate layers (13) made of a soft packing material, characterised in that metal annular discs (9) are disposed between the corrugated annular discs (10) seated against the latter, that the groove is constructed as a prestressing groove (7), and that the sealing ring (8) is prestressed in the prestressing groove (7) with a seat-engaging surface (14) projecting beyond the sealing face (5) by means of a prestressing force acting orthogonally to the plane of the closure flap (3).

2. A closure element according to claim 1, wherein the prestressing groove (7) is constructed from a recess in the closure flap (3) and from a prestressing ring (15) which can be clamped adjustably against the sealing ring (8) by means of prestressing screws (16) distributed over its circumference.

3. A closure element according to either one of claims 1 or 2, wherein the corrugated spring ring is constructed from at least two metal annular discs (9) and at least two corrugated annular discs (10), between which the soft packing material (13) is disposed, and wherein a layer (17) of the soft packing material is additionally provided facing a contact face of the prestressing groove (7).

4. A closure element according to any one of claims 1 to 3, wherein the corrugated spring ring comprises at least five metal annular discs (9) and at least five corrugated annular discs (10).

5. A closure element according to any one of claims 1 to 4, wherein graphite is used as the soft packing material (13).

6. A closure element according to any one of claims 1 to 5, wherein the annular discs (9) and the corrugated annular discs (10) consist of stainless steel.

7. A closure element according to any one of claims 1 to 6, wherein the metal annular discs (9) and the corrugated annular discs (10) have a thickness of about 0.5 mm.

8. A closure element according to any one of claims 1 to 7, wherein the corrugated annular discs (10) have at least five corrugation peaks (11) or corrugation troughs (12) in the radial direction.

## Revendications

1. Elément obturateur pour milieux fluides, comprenant un carter (1) avec canal d'écoulement (2), un clapet d'arrêt (3), un siège de clapet d'arrêt (4) dans le carter (1), et un dispositif pour l'actionnement du clapet d'arrêt, ledit clapet d'arrêt (3) présentant une surface d'étanchéité (5) de forme conique, le siège de clapet d'arrêt (4) présentant une surface d'étanchéité complémentaire (6) de forme conique, et la surface d'étanchéité (5) pouvant être amenée en contact avec et respectivement écartée de la surface d'étanchéité complémentaire (6), pratiquement sans friction, lors des mouvements de fermeture et d'ouverture, une rainure (7) pour un joint d'étanchéité (8) étant prévue dans le bord du clapet d'arrêt (3) portant la surface d'étanchéité (5), le joint d'étanchéité (8) étant conformé en anneau d'étanchéité à rondelles ondulées constitué d'une pluralité de rondelles ondulées (10) métalliques avec des crêtes (11) et des creux (12) circulaires ainsi que de couches intermédiaires (13) d'une matière de garniture molle, caractérisé en ce qu'entre les rondelles ondulées (10) sont disposées des rondelles annulaires (9) métalliques appliquées contre celles-ci, que la rainure est conformée en rainure de précontrainte (7) et que dans la rainure de précontrainte (7), le joint d'étanchéité (8) est mis en précontrainte par une force de précontrainte agissant perpendiculairement au plan du clapet d'arrêt (3) de manière à dépasser avec une surface de contact (14) de la surface d'étanchéité (5).

2. Elément obturateur selon la revendication 1, dans lequel la rainure de précontrainte (7) est constituée par un évidement dans le clapet d'arrêt (3) et par une bague de précontrainte (15) qui peut être bloquée, et ce de manière ajustable, par rapport au joint d'étanchéité (8) au moyen de vis de précontrainte (16) réparties sur la périphérie.

3. Elément obturateur selon l'une des revendications 1 ou 2, dans lequel l'anneau à rondelles ondulées est constitué par au moins deux rondelles annulaires (9) métalliques et au moins deux rondelles ondulées (10) entre lesquelles est placée la matière de garniture molle (13), et dans lequel est prévue en plus une couche (17) de matière de garniture molle dirigée vers la surface de contact de la rainure de précontrainte (7).

4. Elément obturateur selon l'une des revendications 1 à 3, dans lequel l'anneau à rondelles ondulées comprend au moins cinq rondelles annulaires (9) et au moins cinq rondelles ondulées (10).

5. Elément obturateur selon l'une des revendications 1 à 4, dans lequel du graphite est utilisé comme matière de garniture molle (13).

6. Elément obturateur selon l'une des revendications 1 à 5, dans lequel les rondelles annulaires (9) et les rondelles ondulées (10) sont constituées d'acier spécial.

7. Elément obturateur selon l'une des revendications 1 à 6, dans lequel les rondelles annulaires (9) métalliques et les rondelles ondulées (10) présentent une épaisseur d'environ 0,5 mm.

8. Elément obturateur selon l'une des revendications 1 à 7, dans lequel les rondelles ondulées (10) présentent au moins cinq crêtes (11) et respectivement creux (12) orientés dans le sens radial.
